# EUROPÄISCHE PATENTSCHRIFT

(11) **EP 3 714 676 B1**
(45) Veröffentlichungstag und Bekanntmachung des Hinweises auf die Patenterteilung: **06.08.2025**
(21) Anmeldenummer: 19213752.9
(22) Anmeldetag: 05.12.2019
(51) Int. Cl.: F16H 3/089, F16H 9/04, A01D 43/08, A01D 43/10, A01D 69/00

(54) **SELBSTFAHRENDER FELDHÄCKSLER SOWIE VERFAHREN ZUR ERNTE MITTELS EINES FELDHÄCKSLERS**
SELF-PROPELLED FORAGE HARVESTER AND METHOD FOR HARVESTING BY MEANS OF A FORAGE HARVESTER
RAMASSEUSE-HACHEUSE-CHARGEUSE AUTONOME AINSI QUE PROCÉDÉ DE RÉCOLTE AU MOYEN D'UNE RAMASSEUSE-HACHEUSE-CHARGEUSE

(30) Priorität: 27.03.2019 DE 102019107829; 06.09.2019 DE 102019123947
(43) Veröffentlichungstag der Anmeldung: 30.09.2020
(73) Patentinhaber: CLAAS Selbstfahrende Erntemaschinen GmbH, 33428 Harsewinkel (DE)
(72) Erfinder: Schiewer, Stefan, 48231 Warendorf (DE); Lütkeschümer, Malte, 49080 Osnabrück (DE); Kersten, Johannes, 49176 Hilter a. TW (DE); Koch, Markus, 48369 Saerbeck (DE); Poppenborg, Maik, 33428 Marienfeld (DE)
(74) Vertreter: CLAAS Gruppe

(56) Entgegenhaltungen:
- DE-A1- 102013 110 636
- DE-A1- 102016 116 918
- DE-A1- 102016 211 570
- US-A- 2 995 944

## Beschreibung

Die vorliegende Anmeldung betrifft einen selbstfahrenden Feldhäcksler gemäß dem Oberbegriff von Anspruch 1. Ferner betrifft die vorliegende Anmeldung ein Verfahren zur Ernte von Früchten mittels eines Feldhäckslers gemäß dem Oberbegriff von Anspruch 17.

Der Häcksler umfasst eine Antriebseinrichtung, die mindestens eine Antriebswelle aufweist. Mittels dieser Antriebseinrichtung ist es möglich, eine Aufbereitungseinrichtung des Feldhäckslers anzutreiben. Diese verfügt über mindestens zwei Aufbereiterwalzen, die parallel zueinander angeordnet sowie derart einander zugeordnet sind, dass sie gemeinsam einen Arbeitsspalt begrenzen. Eine solche Aufbereitungseinrichtung wird auch als "Corncracker" bezeichnet. Sie dient insbesondere dazu, mittels des Feldhäckslers geernteten Früchte "aufzudrücken" bzw. "aufzuquetschen", indem die Früchte durch den Arbeitsspalt geführt und infolge einer gegenläufigen Rotation der Aufbereiterwalzen zwischen selbigen aufgerieben werden. Dies hat den Vorteil, dass die biologische Verwertung der aufbereiteten Früchte deutlich zügiger vonstattengehen kann, als ohne die Aufbereitung.

Zwecks Übertragung eines Antriebsdrehmoments von der Antriebswelle der Antriebseinrichtung auf die Aufbereiterwalzen der Aufbereitungseinrichtung verfügt der Feldhäcksler über mindestens eine Getriebeeinrichtung, die mindestens ein Riemengetriebe aufweist. Das Riemengetriebe umfasst mindestens einen Treibriemen, der an der Antriebswelle mit einer Antriebsriemenscheibe zusammenwirkt. Auf der Seite der Aufbereitungseinrichtung ist der Treibriemen zudem mit mindestens einer Abtriebsriemenscheibe gekoppelt, die mindestens einer der Abtriebswellen der Aufbereiterwalzen zugeordnet ist. Vorzugsweise werden die Abtriebsriemenscheiben beider Aufbereiterwalzen mittels desselben Treibriemens angetrieben. Die Antriebsriemenscheibe ist in Kraft übertragender Weise mit der ihr zugeordneten Antriebswelle koppelbar oder gekoppelt, während die mindestens eine Abtriebsriemenscheibe entsprechend mit der ihr zugeordneten Abtriebswelle der jeweiligen Aufbereiterwalze koppelbar oder gekoppelt ist. Auf diese Weise ist es mittels der Getriebeeinrichtung möglich, ein mittels der Antriebseinrichtung auf die Antriebswelle ausgeübtes Drehmoment auf mindestens eine der Aufbereiterwalzen der Aufbereitungseinrichtung zu übertragen.

Feldhäcksler der eingangs beschriebenen Art sind im Stand der Technik bereits bekannt. Hierzu wird beispielhaft auf die deutsche Offenlegungsschrift DE 10 2016 211 570 A1 hingewiesen. Diese beschäftigt sich mit der Aufgabe, ein Verhältnis zwischen einer Drehzahl der ersten Abtriebswelle der ersten Aufbereiterwalze und einer Drehzahl der zweiten Abtriebswelle der zweiten Aufbereiterwalze zu verändern. Dies dient dazu, eine Aufbereitungsintensität, mit der die Früchte aufbereitet, das heißt effektiv "zerrieben" werden, einzustellen. Je nach Erntebedingungen, Erntegut und Verwendung des Ernteguts können unterschiedliche Aufbereitungsintensitäten vorteilhaft sein. Zur Erlangung der Einstellbarkeit offenbart besagtes Dokument eine Getriebeeinrichtung, die zwei separate Treibriemen jeweils zum Antrieb einer der Aufbereiterwalzen aufweist. Einer der Treibriemen kann dabei mit einem Riemenvariator oder einem sogenannten CVT zusammenwirken, mittels dessen eine Übersetzung zwischen der Antriebswelle und der dem jeweiligen Treibriemen zugeordneten Abtriebswelle veränderbar ist. Mittels Veränderung des besagten Übersetzungsverhältnisses wird bei Gleichbleiben des Übersetzungsverhältnisses zwischen der Antriebswelle und der anderen Abtriebswelle im Ergebnis eine Veränderung des Drehzahlverhältnisses zwischen den beiden Abtriebswellen erreicht. Weitere Feldhäcksler sind aus den Dokumenten DE 10 2013 110 636 A1 und DE 10 2016 116 918 A1 bekannt geworden.

Der bekannte Feldhäcksler ist insoweit nachteilig, als die Getriebeeinrichtung besonders aufwendig konstruiert ist, um den gewünschten Effekt zu erreichen.

Der vorliegenden Anmeldung liegt mithin die Aufgabe zugrunde, einen Feldhäcksler bereitzustellen, dessen Getriebeeinrichtung einfacher konstruiert ist als im Stand der Technik.

Die zugrunde liegende Aufgabe wird erfindungsgemäß mittels eines Feldhäckslers mit den Merkmalen des Anspruchs 1 gelöst. Vorteilhafte Ausgestaltungen ergeben sich aus den Unteransprüchen 2 bis 16.

Der erfindungsgemäße Feldhäcksler umfasst eine Getriebeeinrichtung die mindestens zwei, vorzugsweise diskrete, Schaltstufen umfasst, mittels der mittelbar oder unmittelbar ein Drehzahlverhältnis zwischen den Abtriebswellen der Aufbereiterwalzen veränderbar ist. Die Getriebeeinrichtung ist von einer Fahrerkabine des Feldhäckslers aus schaltbar.

Der erfindungsgemäße Feldhäcksler hat viele Vorteile. Insbesondere ist es möglich, dass zwischen den Aufbereiterwalzen herrschende Drehzahlverhältnis mittels eines Wechsels zwischen den Schaltstufen der Getriebeeinrichtung zu verändern. Hierbei kommt mindestens eine Kupplung zum Einsatz, die besonders einfach von der Fahrerkabine des Feldhäckslers aus schaltbar ist. Weiterhin ist es von Vorteil, wenn eine solche Schaltung unter Last, das heißt während des eigentlichen Erntebetriebs, stattfinden kann. Eine Unterbrechung des Erntebetriebs ist nicht notwendig. Der Maschinenführer des Feldhäckslers kann folglich besonders einfach die Aufbereitungsintensität der Aufbereitungseinrichtung verändern und beispielsweise an veränderte Erntebedingungen anpassen. Auch ist ein automatisches Schalten zwischen den Schaltstufen denkbar, wie nachstehend gesondert ausgeführt ist. Die besonders leichte Änderung der Drehzahlverhältnisses zwischen den Aufbereiterwalzen ermöglicht es zudem, den Energiebedarf der Aufbereitungseinrichtung den gegebenen Umstände anzupassen, sodass die Leistung der Aufbereitungseinrichtung nicht unnötig zu hoch ist, wodurch unnötig Treibstoff verbraucht und hierdurch die Ernte insgesamt ineffizienter wird.

Vorteilhafterweise kann mittels der Getriebeeinrichtung ein Übersetzungsverhältnis zwischen der Antriebswelle und genau einer der Abtriebswellen veränderbar sein. Mittels einer solchen Veränderung wird automatisch das Drehzahlverhältnis zwischen den beiden Abtriebswellen verändert, sofern die Drehzahl der anderen Abtriebswelle unverändert bleibt oder in anderer Weise geändert wird als die Drehzahl der ersten Abtriebswelle. Der Einfachheit halber ist es vorteilhaft, wenn die Schaltstufen lediglich einer der Abtriebswellen zugeordnet sind, während das Übersetzungsverhältnis zwischen der Antriebswelle und der anderen Abtriebswelle fest ist. Gleichwohl ist es denkbar, dass die Übersetzungsverhältnisse zwischen der Antriebswelle und jeweils einer der Abtriebswellen unabhängig voneinander veränderbar sind.

In einer vorteilhaften Ausgestaltung sind die Schaltstufen lediglich einer hinteren der beiden Aufbereiterwalzen zugeordnet. Die Unterscheidung zwischen einer "hinteren Aufbereiterwalze" und einer "vorderen Aufbereiterwalze" wird in Betrachtung einer Fahrtrichtung des Feldhäckslers getroffen. Das Versehen der hinteren Aufbereiterwalze mit den Schaltstufen ist insoweit vorteilhaft, als die Leistungsaufnahme der hinteren Aufbereiterwalze typischerweise geringer ist.

Vorteilhafterweise beträgt das Drehzahlverhältnis zwischen den Abtriebswellen in einer ersten Schaltstufe der Getriebeeinrichtung 1:1,05. In einer zweiten Schaltstufe der Getriebeeinrichtung beträgt das Drehzahlverhältnis vorzugsweise mindestens 1:1,10, weiter vorzugsweise mindestens 1:1,15, noch weiter vorzugsweise mindestens 1:1,20. Innerhalb der angegebenen Spanne ist die Aufbereitung von Früchten für verschiedene Szenarien besonders gut möglich.

Als Antriebswelle kann insbesondere eine Abtriebswelle eines Nachbeschleunigers des Feldhäckslers dienen. Letzterer ist typischerweise stromabwärts der Aufbereitungseinrichtung angeordnet und dient dazu, dass aufbereitete Erntegut zu beschleunigen, sodass es unter Anwendung eines Auswurfkrümmers aus dem Feldhäcksler ausgeworfen werden kann. Der Nachbeschleuniger wird mittels der Antriebseinrichtung angetrieben, wobei der Nachbeschleuniger eine Abtriebswelle aufweist, auf der ein Arbeitsorgan des Nachbeschleunigers gelagert ist. In der vorteilhaften Ausgestaltung dieser Abtriebswelle des Nachbeschleunigers vorzugsweise etwas verlängert ausgeführt, sodass die Abtriebswelle mittels Montage einer Antriebsriemenscheibe als Antriebswelle für die Aufbereitungseinrichtung dienen kann. Auf diese Weise entfällt die Anordnung einer gesonderten Antriebswelle für die Aufbereitungseinrichtung. Da der Nachbeschleuniger typischerweise in unmittelbarer Nähe zu der Aufbereitungseinrichtung angeordnet ist, kann die notwendige Drehmomentübertragung von der Antriebswelle (bzw. der Abtriebswelle des Nachbeschleunigers) zu den Abtriebsriemenscheiben der Aufbereiterwalzen ohne Weiteres mittels mindestens eines Treibriemens erfolgen.

In einer vorteilhaften Ausgestaltung des erfindungsgemäßen Feldhäckslers umfasst die Getriebeeinrichtung mindestens ein Stirnradgetriebe, das auf mindestens einer der Abtriebswellen der Aufbereiterwalzen angeordnet ist. Vorteilhafterweise ist genau eine der Abtriebswellen mit einem entsprechenden Stirnradgetriebe ausgestattet. Letzteres ist dazu geeignet, mit der zugehörigen Abtriebsriemenscheibe der jeweiligen Abtriebswelle zusammenzuwirken. Der Stirnradgetriebe umfasst vorzugsweise mindestens zwei Schaltstufen, sodass ein Übersetzungsverhältnis zwischen einer Drehzahl der Abtriebsriemenscheibe und einer Drehzahl der Abtriebswelle veränderbar ist. Das Stirnradgetriebe greift mithin zwischen der Abtriebsriemenscheibe und der Abtriebswelle ein. Dies hat zur Folge, dass die Drehzahl der Antriebswelle unverändert bleiben kann, da die Realisierung der erfindungsgemäßen Schaltstufen in dem Stirnradgetriebe stattfindet, die der jeweiligen Aufbereiterwalze direkt zugeordnet ist.

Bei Verwendung eines solchen Stirnradgetriebes ist es von besonderem Vorteil, wenn dieses mindestens eine Kupplung umfasst, die in Form einer Reibkupplung ausgebildet sein kann. Mittels einer solchen Kupplung ist es besonders einfach möglich, zwischen den Schaltstufen des Stirnradgetriebes zu schalten und auf diese Weise das Übersetzungsverhältnis zwischen der Drehzahl der Abtriebsriemenscheibe und der Drehzahl der Abtriebswelle wunschgemäß zu verändern. Besagte Veränderung führt im Ergebnis zu der gewünschten Veränderung des Übersetzungsverhältnisses zwischen der Antriebswelle und der jeweiligen Abtriebswelle sowie letztlich zu der gewünschten Änderung des Drehzahlverhältnisses zwischen den beiden Abtriebswellen.

Als zusätzliche Ausgestaltung zu einer Getriebeeinrichtung, die ein vorstehend dargelegtes Stirnradgetriebe umfasst, kann es besonders vorteilhaft sein, wenn ein Durchmesser mindestens einer Abtriebsriemenscheibe der Getriebeeinrichtung veränderbar ist. Eine solche Abtriebsriemenscheibe kann insbesondere von einem sogenannten "Segmentvariator" gebildet sein, der über seinen Umfang verteilt über eine Mehrzahl von Segmenten verfügt, die in radiale Richtung bezogen auf die Abtriebswelle, vorzugsweise synchron, bewegbar sind. Die radiale Bewegung der einzelnen Segmente führt mithin zu einer Veränderung eines effektiven Durchmessers der Abtriebsriemenscheibe, wodurch das Übersetzungsverhältnis zwischen der Antriebswelle und der zugeordneten Abtriebswelle verändert wird.

In einer weiteren Ausführungsform des erfindungsgemäßen Feldhäckslers umfasst das Riemengetriebe der Getriebeeinrichtung mindestens zwei Treibriemen, die gemeinsam mindestens einer der Abtriebswellen zugeordnet sind. Hierbei ist es denkbar, dass die beiden Treibriemen nur genau einer Abtriebswelle oder beiden Abtriebswellen der Aufbereitungseinrichtung zugeordnet sind. Zumindest eine der Abtriebswellen wirkt bei dieser Ausführungsform mit mindestens zwei Abtriebsriemenscheiben zusammen, wobei die Anzahl der Abtriebsriemenscheiben, die auf der jeweiligen Abtriebswelle angeordnet sind, vorzugsweise identisch ist mit der Anzahl der Treibriemen, über die das Riemengetriebe verfügt. Die beiden Abtriebsriemenscheiben derselben Abtriebswelle weisen dabei unterschiedliche Durchmesser auf, wobei jeder der Abtriebsriemenscheiben mindestens ein Treibriemen des Riemengetriebes zugeordnet ist. Die Abtriebsriemenscheiben sind derart ausgebildet, dass sie wechselweise in Kraft übertragenden Eingriff mit der zugehörigen Abtriebswelle bringbar sind. Auf diese Weise ist das Übersetzungsverhältnis zwischen der Antriebswelle und der Abtriebswelle schaltbar: Bei Verbindung einer ersten Abtriebsriemenscheibe mit der Abtriebswelle ist das Übersetzungsverhältnis zwischen der Antriebswelle und der Abtriebswelle von einem Durchmesserverhältnis zwischen der Antriebsriemenscheibe und der jeweilig aktiven Abtriebsriemenscheibe abhängig. Bei Umschalten auf die andere Abtriebsriemenscheibe derselben Abtriebswelle, die einen anderen Durchmesser aufweist, ändert sich zwangsläufig das Durchmesserverhältnis zwischen der Antriebsriemenscheibe und der Abtriebsriemenscheibe und mithin das Übersetzungsverhältnis zwischen der Antriebswelle und der Abtriebswelle.

Die beschriebene Ausgestaltung ist dann besonders vorteilhaft, wenn die Getriebeeinrichtung mindestens eine Kupplung umfasst, die zwischen den Antriebsriemenscheibe angeordnet ist und dazu geeignet ist, diese wechselweise in Kraft übertragender Weise der Abtriebswelle zu koppeln. Die jeweilige Abtriebsriemenscheibe, die ausgekoppelt ist, wird vorzugsweise gleichwohl mittels des jeweils zugeordneten Treibriemens angetrieben; aufgrund der mangelnden Verbindung zu der Abtriebswelle bleibt die jeweilige Abtriebsriemenscheibe gleichwohl wirkungslos. Zwecks Vereinfachung der Getriebeeinrichtung ist es entsprechend vorteilhaft, wenn beide Treibriemen fortwährend mit der Antriebsriemenscheibe gekoppelt sind.

Unabhängig von der Ausgestaltung der Getriebeeinrichtung weist der erfindungsgemäße Feldhäcksler mindestens eine Steuereinheit auf, die mit mindestens einem Aktor der Getriebeeinrichtung verbindbar ist. Der Aktor dient dazu, zwischen den Schaltstufen der Getriebeeinrichtung zu schalten. Der Aktor wirkt mit einer Kupplung zusammen, die zwischen verschiedenen Schaltstufen bewegt wird. Somit kann der Aktor beispielsweise hydraulisch ausgebildet sein, wobei mittels Betätigung des Aktors ein Arbeitsfluid unter Druck setzbar und hierdurch ein Kopplungselement antreibbar ist.

Bei Verwendung eines solchen Aktors kann es zudem besonders von Vorteil sein, wenn der Feldhäcksler mindestens eine Sensoreinrichtung aufweist, mittels der Daten betreffend mindestens einen Ernteparameter und/oder mindestens einen Betriebsparameter des Feldhäckslers erfassbar sind. Die so erfassten Daten können sodann an die Steuereinheit geleitet werden, mittels der in Abhängigkeit der Daten ein Schaltbefehl erzeugbar ist. Dieser ist sodann an den Aktor leitbar, der daraufhin eine Veränderung der Schaltstufe der Getriebeeinrichtung vornimmt. Mittels einer solchen Ausgestaltung ist es denkbar, dass die Schaltstufen der Getriebeeinrichtung automatisch, das heißt ohne Zutun eines Maschinenführers des Feldhäckslers, geschaltet werden, wobei ein jeweiliger Schaltbefehl in Abhängigkeit herrschender Ernteparameter und oder Betriebsparameter des Feldhäckslers gegeben wird. Auf diese Weise kann die Aufbereitungsintensität der Aufbereitungseinrichtung fortwährend auf einem bestmöglichen Niveau gehalten werden.

Vorteilhafterweise verfügt der erfindungsgemäße Feldhäcksler zudem in seiner Fahrerkabine über eine Bedieneinheit, mittels der der Maschinenführer einen Schaltbefehl erzeugen kann, der sodann an den Aktor leitbar ist. Eine solche Bedieneinheit ermöglicht mithin, dass der Maschinenführer einen manuellen Einfluss auf die Schaltstufe der Getriebeeinrichtung nehmen kann. Eine solche Möglichkeit kann zusätzlich oder alternativ zu einer automatisierten Steuerung der Schaltstufen gemäß vorstehender Beschreibung realisiert sein. Somit ist es denkbar, dass der Maschinenführer entgegen einem von der Steuereinheit erzeugten Schaltbefehl eine bestimmte Schaltstufe der Getriebeeinrichtung auswählen möchte, wozu er unter Verwendung der Bedieneinheit befähigt ist.

In verfahrenstechnischer Hinsicht wird die zugrunde liegende Aufgabe erfindungsgemäß mittels eines Verfahrens mit den Merkmalen des Anspruchs 17 gelöst. Vorteilhafte Ausgestaltungen ergeben sich aus den Unteransprüchen 18 bis 20.

Das erfindungsgemäße Verfahren betrifft eine Getriebeeinrichtung die von einer Fahrerkabine des Feldhäckslers aus geschaltet wird, wobei die Schaltstufen der Getriebeeinrichtung mit voneinander verschiedenen Drehzahlverhältnissen zwischen den Abtriebswellen korrespondieren.

Das erfindungsgemäße Verfahren ist mittels des erfindungsgemäßen Feldhäckslers besonders einfach durchführbar. Die sich hierdurch ergebenden Vorteile sind vorstehend bereits dargelegt. Insbesondere ist es ohne Weiteres möglich, das genannte Drehzahlverhältnis während eines laufenden Betriebs des Feldhäckslers zu verändern und auf diese Weise die Aufbereitungsintensität der Aufbereitungseinrichtung zügig und einfach anzupassen.

In einer vorteilhaften Ausgestaltung des erfindungsgemäßen Verfahrens wird mittels Umschaltung zwischen den Schaltstufen der Getriebeeinrichtung ein Übersetzungsverhältnis zwischen der Antriebswelle und genau einer Abtriebswelle einer der Aufbereiterwalzen verändert. Die Veränderung dieses Übersetzungsverhältnisses hat unmittelbar eine Veränderung des Drehzahlverhältnisses zwischen den Drehzahlen der Abtriebswellen der Aufbereiterwalzen zur Folge. Eine Veränderung des Übersetzungsverhältnisses zwischen der Antriebswelle und einer der Abtriebswellen ist vergleichsweise einfach möglich, beispielsweise mittels einer der vorstehend dargelegten Ausführungsformen.

Weiterhin kann es besonders vorteilhaft sein, wenn die Schaltstufen der Getriebeeinrichtung infolge händischer Bedienung einer in der Fahrerkabine des Feldhäckslers befindlichen Bedieneinheit und/oder automatisch geschaltet werden. Während eine automatische Schaltung der Getriebeeinrichtung insbesondere eine Fehlbedienung vermeidet und zudem eine Entlastung des Maschinenführers darstellt, kann ein händisches Schalten mittels Betätigung der Bedieneinheit einen eventuell ungünstigen Steuerbefehl einer Steuereinheit korrigieren. Auch ist es denkbar, dass ein Feldhäcksler in einer einfacheren Ausstattungsvariante lediglich über eine händische Bedieneinheit verfügt, sodass ein automatisches Schalten der Getriebeeinrichtung nicht möglich ist.

Schließlich ist ein solches Verfahren besonders vorteilhaft, bei dem mittels mindestens einer Sensoreinrichtung Daten betreffend mindestens einen Ernteparameter und/oder mindestens einen Betriebsparameter des Feldhäckslers erfasst werden. Diese werden sodann an eine Steuereinheit weitergeleitet, mittels der in Abhängigkeit der erfassten Daten ein Schaltbefehl erzeugt und an einen Aktor der Getriebeeinrichtung geleitet wird. Mittels des Aktors wird schließlich infolge des Schaltbefehls die Schaltstufe der Getriebeeinrichtung geändert. Mittels dieser Verfahrensweise ist ein automatisiertes Schalten der Getriebeeinrichtung besonders einfach möglich.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Feldhäcksler,
- Fig. 2:: Eine schematische Ansicht einer Aufbereitungseinrichtung in Zusammenwirkung mit einer zugeordneten Getriebeeinrichtung,
- Fig. 3:: Ein schematisches Detail einer Abtriebswelle einer Aufbereiterwalze der Aufbereitungseinrichtung gemäß Figur 2, die mit einem Stirnradgetriebe ausgestattet ist,
- Fig. 4:: Eine schematische Ansicht der Aufbereitungseinrichtung gemäß Figur 2 in Zusammenwirkung mit einer alternativen Getriebeeinrichtung,
- Fig. 5:: Eine schematische Ansicht der Aufbereitungseinrichtung gemäß Figur 2 in Zusammenwirkung mit einer weiteren alternativen Getriebeeinrichtung und
- Fig. 6:: Ein schematischer Querschnitt durch zwei Abtriebsriemenscheiben, die mit einer gemeinsamen Abtriebswelle eine Aufbereiterwalze der Aufbereitungseinrichtung gemäß Figur 5 zusammenwirken.

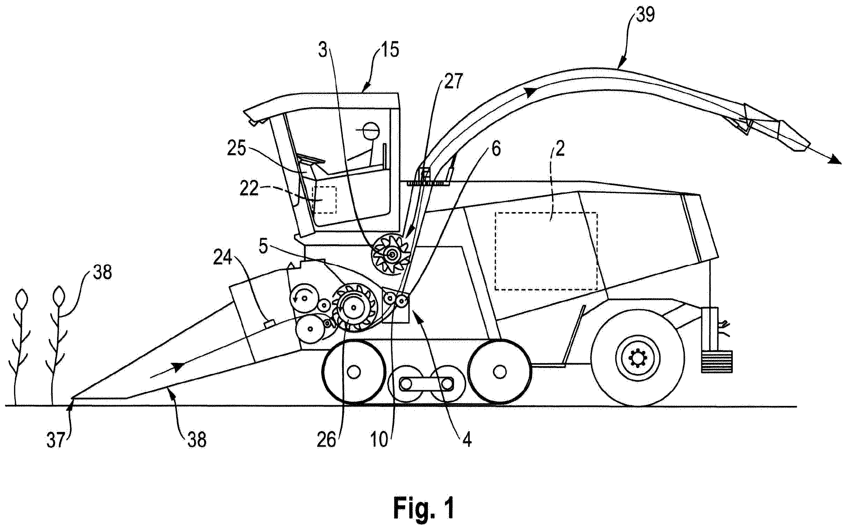

In den **Figuren 1 bis 6** sind verschiedene Ausführungsbeispiele betreffend verschiedene Ausgestaltungen von Getriebeeinrichtungen veranschaulicht, die jeweils einen erfindungsgemäßen Feldhäcksler **1** ausmachen. Ein solcher erfindungsgemäßer Feldhäcksler **1** ergibt sich besonders gut anhand von **Figur 1****.** Dieser umfasst eine Antriebseinrichtung **2,** die hier von einer Verbrennungskraftmaschine gebildet ist. Der Feldhäcksler **1** verfügt des Weiteren über ein Maisgebiss **37,** mittels dessen Maispflanzen **38** von einem Feld erntbar sind. Die geschnittenen Pflanzen werden mittels eines Schrägförderers **38** in Richtung eines Häckselorgans **26** gefördert, mittels dessen die geschnittenen Pflanzen gehäckselt werden. Stromabwärts des Dreschorgans **26** befindet sich eine Aufbereitungseinrichtung **4,** die zwei Aufbereiterwalzen **5, 6** umfasst. Die Aufbereiterwalzen **5, 6** sind jeweils drehantreibbar gelagert sowie derart einander zugeordnet, dass sie sich parallel zueinander erstrecken und auf diese Weise gemeinsam einen Arbeitsspalt **10** begrenzen. Das gehäckselte Erntegut wird durch diesen Arbeitsspalt **10** geführt und im Zuge dessen zwischen den Aufbereiterwalzen **5, 6** aufbereitet, wobei insbesondere einzelne Körner der geernteten Pflanzen aufgedrückt bzw. zwischen den Aufbereiterwalzen **5, 6** zerrieben werden. Schließlich wird das auf diese Weise aufbereitete Erntegut mittels eines stromabwärts der Aufbereitungseinrichtung **4** angeordneten Nachbeschleunigers **27** beschleunigt und durch einen Auswurfkrümmer **39** aus dem Feldhäcksler **1** ausgeworfen.

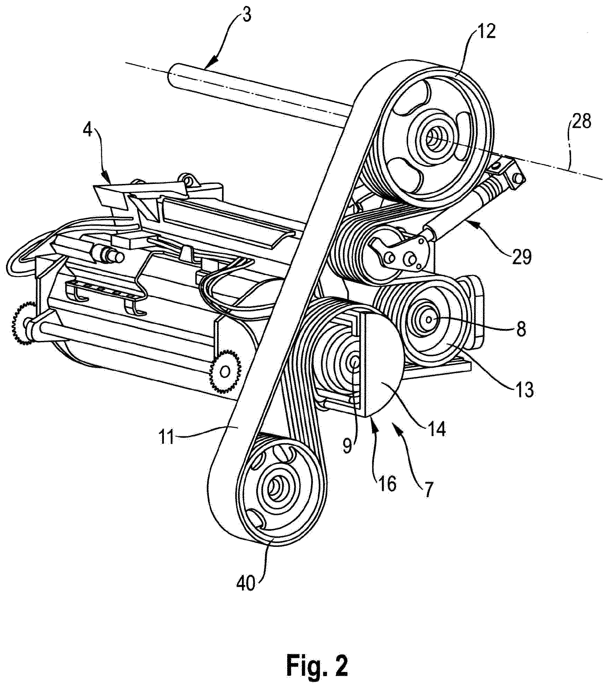

Die Antriebseinrichtung **2** wirkt zumindest mittelbar mit einer um eine Antriebsachse **28** drehantreibbare Antriebswelle **3** zusammen. Diese ist hier von einer Abtriebswelle des Nachbeschleunigers **27** gebildet, der sich in unmittelbarer Nähe der Aufbereitungsanlage **4** befindet. Die so gebildete Antriebswelle **3** wirkt mit einer Antriebsriemenscheibe **12** zusammen. Diese ist in den hier gezeigten Beispielen unabhängig von der jeweiligen Ausgestaltung einer Getriebeeinrichtung **7** besonders gut anhand der **Figuren 2****,** **4** **und** **5** erkennbar. Die separaten Ausführungsbeispiele, die nachstehend erläutert sind, befassen sich mit unterschiedlichen Ausgestaltungen der jeweiligen Getriebeeinrichtung **7,** mittels der eine Kraftübertragung zwischen der Antriebswelle **3** und jeweiligen Abtriebswellen **8, 9** der Aufbereiterwalzen **5, 6** vorgenommen wird.

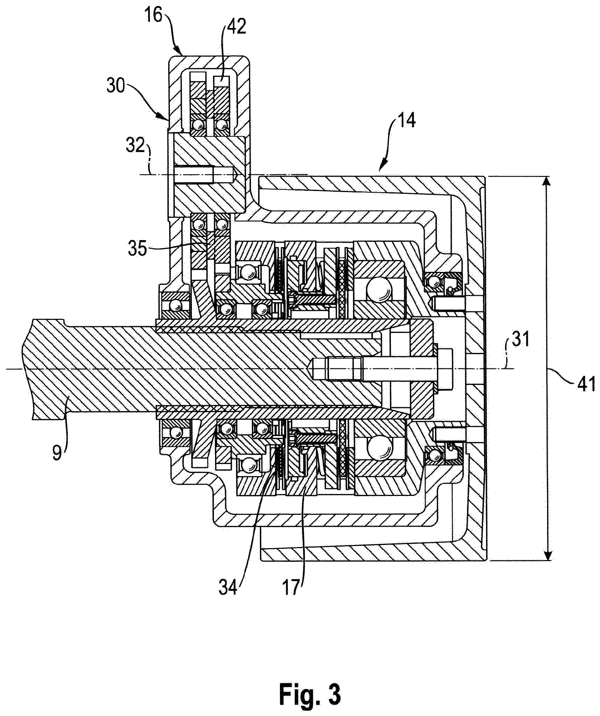

In einer ersten Ausgestaltung, die in den **Figuren 2** **und** **3** dargestellt ist, umfasst die Getriebeeinrichtung **7** einen Treibriemen **11,** eine mit der Antriebswelle **3** zusammenwirkende Antriebsriemenscheibe **12,** eine mit einer ersten Abtriebswelle **8** zusammenwirkende Abtriebsriemenscheibe **13** sowie eine mit der zweiten Abtriebswelle **9** zusammenwirkende Abtriebsriemenscheibe **14.** Ferner umfasst die Getriebeeinrichtung **7** einen Riemenspanner **29,** mittels dessen der Treibriemen **11** auf Spannung haltbar ist. Schließlich umfasst die Getriebeeinrichtung **7** eine Umlenkrolle **40** zur Führung des Treibriemens **11.** Wie sich aus der Führung des Treibriemens **11** ergibt, werden hier beide Aufbereiterwalzen **5, 6** mittels desselben Treibriemens **11** angetrieben. Ein Antrieb der Aufbereiterwalzen **5, 6** unabhängig voneinander ist gleichermaßen denkbar.

In dem gezeigten Beispiel wirkt die hintere Abtriebswelle **9** mit einem Stirnradgetriebe **16** der Getriebeeinrichtung **7** zusammen. Diese Stirnradgetriebe **16,** das sich insbesondere anhand der schematischen Darstellung gemäß **Figur 3** ergibt, wirkt unmittelbar zwischen der Abtriebsriemenscheibe **14** und der zugehörigen Abtriebswelle **9.** In dem gezeigten Beispiel umfasst das Stirnradgetriebe **16** zwei separate Schaltstufen, zwischen denen mittels einer Kupplung **17** geschaltet werden kann. Diese ist hier in Form einer Reibkupplung ausgeführt, die mit einander gegenüberliegenden Reibflächen **33, 34** in Eingriff bringbar ist. Auf diese Weise ist es möglich, mittels der Kupplung **17** wechselweise zwischen den beiden Schaltstufen des Stirnradgetriebes **16** zu schalten. Die Kupplung **17** ist mittels eines in **Figur 3** nicht dargestellten Aktors **23** in eine Richtung parallel zu einer Abtriebsachse **31** der Abtriebswellen **9** bewegbar und auf diese Weise zwischen den Reibflächen **33, 34** schaltbar. Der Aktor **23** kann beispielsweise mechanisch, hydraulisch oder elektrisch wirken.

In der ersten Schaltstufe, in der die Kupplung **17** sich in Eingriff mit der ersten Reibfläche **33** befindet, koppelt die Kupplung **17** die Abtriebsriemenscheibe **14** unmittelbar mit der Abtriebswelle **9,** sodass eine Drehzahl der Abtriebswelle **9** im Betrieb der Aufbereitungseinrichtung **4** identisch zu einer Drehzahl der Abtriebsriemenscheibe **14** ist. Dabei weisen die Abtriebsriemenscheiben **13, 14** der beiden Aufbereiterwalzen **5, 6** in dem gezeigten Beispiel derart verschiedene Durchmesser **41** auf, dass bei Einstellen der ersten Schaltstufe das Drehzahlverhältnis zwischen den Aufbereiterwalzen **5, 6** in dem gezeigten Beispiel 1:1,05 beträgt. Dieses Drehzahlverhältnis kann auch einen anderen Wert annehmen.

Zwecks Umschaltens der Getriebeeinrichtung **7** wird die Kupplung **17** parallel zu der Abtriebsachse **31** bewegt und mit der gegenüberliegenden Reibfläche **34** in Eingriff gebracht. Hierdurch wird eine Kraftübertragung zwischen der Abtriebsriemenscheibe **14** und der Abtriebswelle **9** über eine Übersetzungsstufe 30 geführt. Diese umfasst ein um eine Übersetzungsachse **32** drehbares Stirnrad **42,** das mittels stirnseitiger Verzahnungen **35** mit der Antriebswelle **9** gekoppelt ist. Mittels der Übersetzungsstufe **30** wird die Abtriebsriemenscheibe **14** "ins Schnelle" übersetzt, sodass im Ergebnis die Drehzahl der Abtriebswelle **9** die Drehzahl der Abtriebsriemenscheibe **14** übersteigt. Da sich gleichzeitig das Übersetzungsverhältnis zwischen der Antriebswelle **3** und der Abtriebswelle **8** der anderen Aufbereiterwalze **5** nicht verändert, liegt in der zweiten Schaltstufe der Getriebeeinrichtung **7** schließlich ein verändertes Drehzahlverhältnis zwischen den Abtriebswellen **8, 9** der beiden Aufbereiterwalzen **5, 6** vor. Das Übersetzungsverhältnis des Stirnradgetriebes **16** in der zweiten Schaltstufe beträgt hier ca. 1:1,15. Dieses Drehzahlverhältnis kann auch einen anderen Wert annehmen.

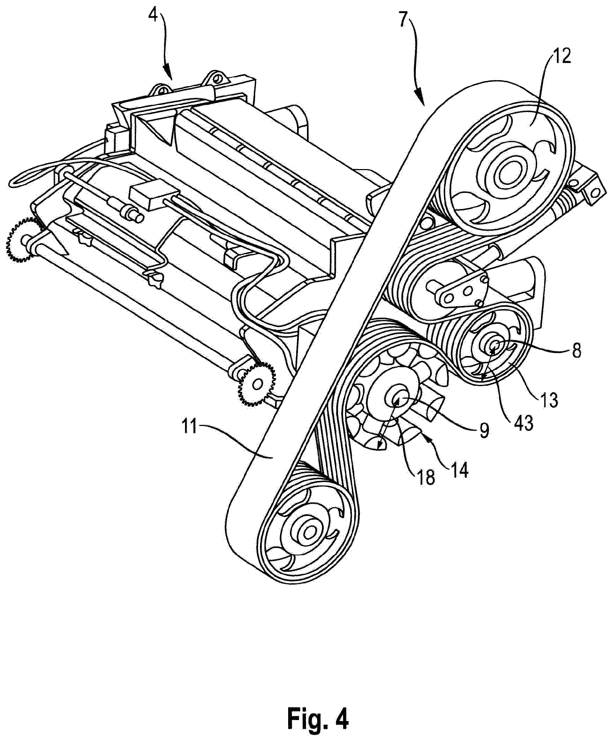

In einer alternativen Ausgestaltung der Getriebeeinrichtung **7,** die in **Figur 4** dargestellt ist, wirkt die Abtriebswelle **9** der hinteren Aufbereiterwalze **6** mit einer Abtriebsriemenscheibe **14** zusammen, deren Durchmesser **18** veränderbar ist. Die Abtriebsriemenscheibe **14** ist hier in Form eines Segmentvariators ausgebildet, der über seinen Umfang verteilt eine Mehrzahl einzelner Segmente aufweist. Diese Segmente sind jeweils in eine Richtung radial bezogen auf die Abtriebswelle **9** bewegbar, sodass sich infolge einer Bewegung der einzelnen Segmente der Durchmesser **18** der Abtriebsriemenscheibe **14** verändert. Infolge einer solchen Veränderung des Durchmessers **18** gegenüber einem Durchmesser **43** der anderen Abtriebsriemenscheibe **13** ergibt sich unmittelbar ein verändertes Drehzahlverhältnis zwischen den Abtriebsriemenscheiben **13, 14** und mithin den Abtriebswellen **8, 9.** Als besonderer Vorteil kann das Drehzahlverhältnis zwischen den Abtriebswellen **8, 9** der Aufbereiterwalzen **5, 6** unter Verwendung eines gezeigten Segmentvariators quasi stufenlos verändert werden, da mit der Bewegung der einzelnen Segmente fortwährend das Übersetzungsverhältnis zwischen der Antriebswelle **3** und der Abtriebswelle **9** verändert wird.

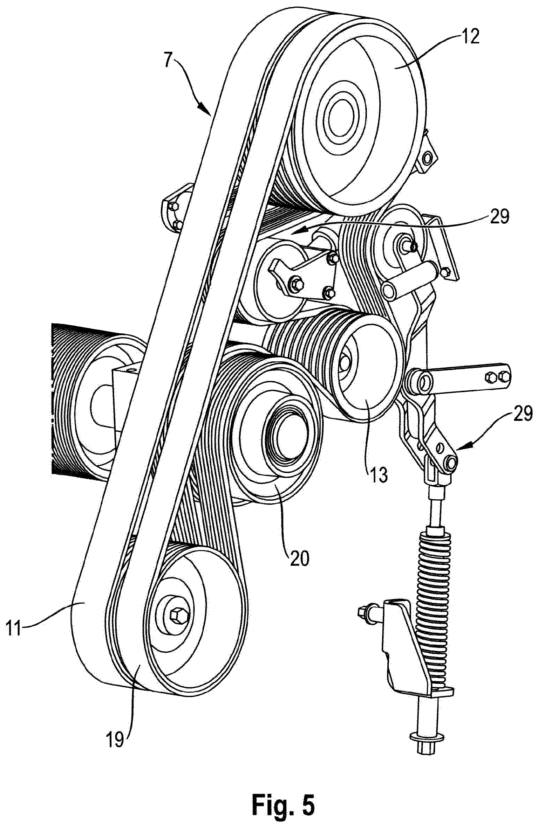

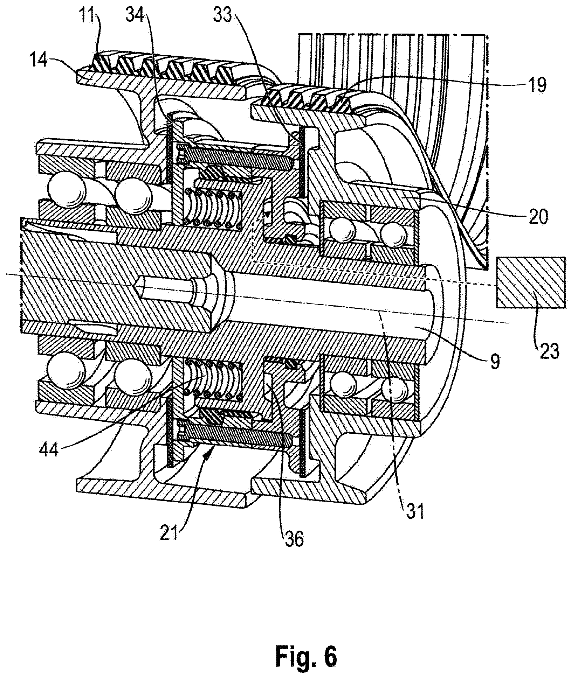

In einem dritten Beispiel, das sich aus den **Figuren 5** **und** **6** ergibt, umfasst die Getriebeeinrichtung **7** zwei separate Treibriemen **11, 19,** die hier jeweils mit beiden Aufbereiterwalzen **5, 6** der Aufbereitungseinrichtung **4** zusammenwirken und jeweils mittels eines eigenen Riemenspanners **29** gespannt sind. Insbesondere wirken beide Treibriemen **11, 19** unmittelbar mit der Antriebsriemenscheibe **12** der Antriebswelle **3** sowie der Abtriebsriemenscheibe **13** der vorderen Aufbereiterwalze **5** zusammen. Die hintere Aufbereiterwalze **6** umfasst derweil zwei verschiedene Abtriebsriemenscheiben **14, 20,** die verschiedene Durchmesser aufweisen. Dies ergibt sich besonders gut anhand der Darstellung gemäß **Figur 6****.** Die beiden Abtriebsriemenscheiben **14, 20** sind wechselweise mit der zugeordneten Abtriebswelle **9** der hinteren Aufbereiterwalze **6** koppelbar, wobei sie mit einer Kupplung **21** zusammenwirken. Diese Kupplung **21** ist wechselweise mit Reibflächen **33, 34** der beiden Abtriebsriemenscheiben **14, 20** verbindbar. Die Kupplung **21** wirkt in dem gezeigten Beispiel mit einem hydraulisch wirkenden Aktor **23** zusammen, mittels dessen ein in eine umlaufende Fluidkammer **36** vorliegendes Arbeitsfluid, insbesondere ein Hydrauliköl, unter Druck setzbar ist. Infolge des Drucks wird die Kupplung **21** entgegen einer Federkraft mehrerer Druckfedern **44** in eine Richtung parallel zu der Abtriebsachse **31** der Abtriebswelle **9** bewegt und hierdurch in Eingriff mit der Reibfläche **33** der Abtriebsriemenscheibe **20** gebracht, deren Durchmesser kleiner ist als derjenige der Abtriebsriemenscheibe **14.** Der Aktor **23** kann insbesondere mittels einer Leitung oder kabellos mit einer Steuereinheit **22** zusammenwirken, die in einer Fahrerkabine **15** des Feldhäckslers **1** angeordnet ist. Dies wird nachstehend gesondert erläutert.

Mittels des Umschaltens zwischen den beiden Abtriebsriemenscheiben **14, 20** wird ein Übersetzungsverhältnis zwischen der Antriebswelle **3** und der Abtriebswelle **9** verändert. Das Übersetzungsverhältnis zwischen der Antriebswelle **3** und der anderen Abtriebswelle **8** der vorderen Aufbereiterwalze **5** bleibt derweil unverändert. Mithin führt das Umschalten zwischen den beiden Abtriebsriemenscheiben **14, 20** zu der gewünschten Veränderung des Drehzahlverhältnisses zwischen den beiden Abtriebswellen **8, 9.**

Unabhängig von der Ausgestaltung der Getriebeeinrichtung **7** ist der erfindungsgemäße Feldhäcksler **1** in dem gezeigten Beispiel mit einer Steuereinheit **22,** einer Sensoreinrichtung **24** und einer Bedieneinheit **25** ausgestattet. Die Steuereinheit **22** ist in der Fahrerkabine **15** des Feldhäckslers **1** angeordnet und mittels einer Datenleitung oder kabellos mit der Sensoreinrichtung **24** verbunden. Zudem ist die Steuereinheit **22** mittels einer Datenleitung oder kabellos mit einem jeweiligen Aktor **23** verbunden, mittels dessen je nach Ausgestaltung der jeweiligen Getriebeeinrichtung **7** beispielsweise eine Kupplung **17, 21** schaltbar und/oder ein Durchmesser der Abtriebsriemenscheibe **14** veränderbar ist. Die Sensoreinrichtung **24** ist in dem gezeigten Beispiel dem Schrägförderer **38** zugeordnet und ist dazu geeignet, einen Durchsatz geernteter Pflanzen zu erfassen. Die auf diese Weise erfassten Daten werden an die Steuereinheit **22** geleitet, die - bei Erkennen eines Handlungsbedarfs betreffend das Drehzahlverhältnis zwischen den Aufbereiterwalzen **5, 6** - einen Steuerbefehl erzeugt und an den Aktor **23** leitet. Letzterer wird daraufhin aktiv und bewirkt dadurch das Umschalten von einer Schaltstufe auf eine andere Schaltstufe der Getriebeeinrichtung **7,** wodurch das Drehzahlverhältnis zwischen den Aufbereiterwalzen **5, 6** zumindest mittelbar in Richtung des gewünschten Drehzahlverhältnisses verändert wird.

Alternativ oder zusätzlich zu der gezeigten Sensoreinrichtung **24** sind weitere Sensoreinrichtungen an verschiedenen Stellen des Feldhäckslers **1** denkbar, die verschiedene Ernteparameter und/oder Betriebsparameter des Feldhäckslers **1** erfassen. Die Erzeugung eines Steuerbefehls mittels der Steuereinheit **22** kann insbesondere in Abhängigkeit von Kennfeldern erfolgen, die beispielsweise auf einem Datenspeicher der Steuereinheit **22** hinterlegt sind. Zusätzlich oder alternativ zur Ausgabe von Steuerbefehlen mittels der Steuereinheit **22** ist es gleichermaßen denkbar, dass der Maschinenführer des Feldhäckslers **1** über die Bedieneinheit **25** einen Steuerbefehl an den jeweiligen Aktor **23** absetzt, infolgedessen die Schaltstufe der Getriebeeinrichtung **7** geändert wird.

### Bezugszeichenliste

- 1: Feldhäcksler
- 2: Antriebseinrichtung
- 3: Antriebswelle
- 4: Aufbereitungseinrichtung
- 5: Aufbereiterwalze
- 6: Aufbereiterwalze
- 7: Getriebeeinrichtung
- 8: Abtriebswelle
- 9: Abtriebswelle
- 10: Arbeitsspalt
- 11: Treibriemen
- 12: Antriebsriemenscheibe
- 13: Abtriebsriemenscheibe
- 14: Abtriebsriemenscheibe
- 15: Fahrerkabine
- 16: Stirnradgetriebe
- 17: Kupplung
- 18: Durchmesser
- 19: Treibriemen
- 20: Abtriebsriemenscheibe
- 21: Kupplung
- 22: Steuereinheit
- 23: Aktor
- 24: Sensoreinrichtung
- 25: Bedieneinheit
- 26: Häckselorgan
- 27: Nachbeschleuniger
- 28: Antriebsachse
- 29: Riemenspanner
- 30: Übersetzungsstufe
- 31: Abtriebsachse
- 32: Übersetzungsachse
- 33: Reibfläche
- 34: Reibfläche
- 35: Verzahnung
- 36: Fluidkammer
- 37: Maisgebiss
- 38: Schrägförderer
- 39: Auswurfkrümmer
- 40: Umlenkrolle
- 41: Durchmesser
- 42: Stirnrad
- 43: Durchmesser
- 44: Druckfeder

## Patentansprüche

1. Selbstfahrender Feldhäcksler (1), umfassend
- eine Antriebseinrichtung (2), die mindestens eine Antriebswelle (3) aufweist,
- eine Aufbereitungseinrichtung (4), die mindestens zwei Aufbereiterwalzen (5, 6) aufweist, sowie
- eine Getriebeeinrichtung (7), die mindestens ein Riemengetriebe aufweist,
wobei die Aufbereiterwalzen (5) jeweils eine Abtriebswelle (8, 9) umfassen und parallel zueinander angeordnet sind, sodass sie gemeinsam einen Arbeitsspalt (10) begrenzen,
wobei das Riemengetriebe mindestens einen Treibriemen (11) sowie mindestens eine der Antriebswelle (3) zugeordnete Antriebsriemenscheibe (12) und mindestens eine mindestens einer der Abtriebswellen (8, 9) zugeordnete Abtriebsriemenscheibe (13, 14) aufweist,
wobei die Antriebswelle (3) mittels des Treibriemens (11) in Kraft übertragender Weise mit der Abtriebsriemenscheibe (13, 14) verbunden ist,
**dadurch gekennzeichnet, dass**
die Getriebeeinrichtung (7) mindestens zwei Schaltstufen umfasst, mittels der mittelbar oder unmittelbar ein Drehzahlverhältnis zwischen den Abtriebswellen (8, 9) der Aufbereiterwalzen (5, 6) veränderbar ist,
wobei die Getriebeeinrichtung (7) von einer Fahrerkabine (15) des Feldhäckslers (1) aus schaltbar ist,
wobei der selbstfahrende Feldhäcksler (1) mindestens eine Steuereinheit (22) umfasst, die mit mindestens einem Aktor (23) der Getriebeeinrichtung (7) verbindbar ist, mittels dessen zwischen den Schaltstufen der Getriebeeinrichtung (7) schaltbar ist,
wobei der Aktor (23) mit einer Kupplung (17, 21) zusammenwirkt, die zum Bewegen zwischen den Schaltstufen eingerichtet ist.

2. Feldhäcksler (1) nach Anspruch 1, **dadurch gekennzeichnet, dass** mittels der Getriebeeinrichtung (7) ein Übersetzungsverhältnis zwischen der Antriebswelle (3) und genau einer der Abtriebswellen (8, 9) veränderbar ist.

3. Feldhäcksler (1) nach Anspruch 1 oder 2, **dadurch gekennzeichnet, dass** das Drehzahlverhältnis zwischen den Abtriebswellen (8, 9) in einer ersten Schaltstufe der Getriebeeinrichtung (7) 1:1,05 beträgt.

4. Feldhäcksler (1) nach einem der vorhergehenden Ansprüche, **dadurch gekennzeichnet, dass** das Drehzahlverhältnis zwischen den Abtriebswellen (8, 9) in einer zweiten Schaltstufe der Getriebeeinrichtung (7) mindestens 1:1,10, vorzugsweise mindestens 1:1,15, weiter vorzugsweise mindestens 1:1,20, beträgt.

5. Feldhäcksler (1) nach Anspruch 3 oder 4, **dadurch gekennzeichnet, dass** die Drehzahlverhältnisse mittels verschiedener Riemenscheiben einstellbar sind, die verschiedene Durchmesser aufweisen.

6. Feldhäcksler (1) nach einem der vorhergehenden Ansprüche, **dadurch gekennzeichnet, dass** die Schaltstufen einer - in Fahrtrichtung des Feldhäckslers (1) betrachtet, hinteren der beiden Aufbereiterwalzen (5, 6) zugeordnet ist.

7. Feldhäcksler (1) nach einem der vorhergehenden Ansprüche, **dadurch gekennzeichnet, dass** die Antriebswelle (3) von einer Abtriebswelle eines Nachbeschleunigers (27) gebildet ist, mittels dessen gehäckseltes Erntegut vor seinem Auswurf aus dem Feldhäcksler (1) beschleunigbar ist.

8. Feldhäcksler (1) nach einem der vorhergehenden Ansprüche, **dadurch gekennzeichnet, dass** die Getriebeeinrichtung (7) mindestens ein Stirnradgetriebe (16) umfasst, das auf mindestens einer der Abtriebswellen (9) der Aufbereiterwalzen (6) angeordnet ist und mit der zugehörigen Abtriebsriemenscheibe (14) zusammenwirkt.

9. Feldhäcksler (1) nach Anspruch 8, **gekennzeichnet durch** die Kupplung (17) in Form einer Reibkupplung, mittels der zwischen den Schaltstufen schaltbar ist.

10. Feldhäcksler (1) nach einem der Ansprüche 8 oder 9, **dadurch gekennzeichnet, dass** ein Durchmesser (18) mindestens einer Abtriebsriemenscheibe (14) der Getriebeeinrichtung (7) veränderbar ist, wobei die Antriebsriemenscheibe (14) vorzugsweise von einem Segmentvariator gebildet ist.

11. Feldhäcksler (1) nach Anspruch 10, **dadurch gekennzeichnet, dass** die Antriebsriemenscheibe (14) eine Mehrzahl von Segmenten aufweist, die in radiale Richtung bezogen auf die zugehörige Abtriebswelle (9) synchron bewegbar sind.

12. Feldhäcksler (1) nach einem der vorhergehenden Ansprüche, **dadurch gekennzeichnet, dass** das Riemengetriebe der Getriebeeinrichtung (7) mindestens zwei Treibriemen (11, 19) und mindestens zwei Abtriebsriemenscheiben (14, 20) aufweist, die derselben Abtriebswelle (9) zugeordnet sind und unterschiedliche Durchmesser aufweisen, wobei jeweils ein Treibriemen (11, 19) einer der Abtriebsriemenscheiben (14, 20) zugeordnet ist und die Abtriebsriemenscheiben (14, 20) wechselweise in Kraft übertragenden Eingriff mit der zugehörigen Abtriebswelle (9) bringbar sind.

13. Feldhäcksler (1) nach Anspruch 12, **dadurch gekennzeichnet, dass** die Kupplung (21) zwischen den Abtriebsriemenscheiben (14, 20) angeordnet und wechselweise mit den beiden Abtriebsriemenscheiben (14, 20) in Eingriff bringbar ist.

14. Feldhäcksler (1) nach Anspruch 12 oder 13, **dadurch gekennzeichnet, dass** beide Treibriemen (11, 19) fortwährend mit der Antriebsriemenscheibe (12) gekoppelt sind.

15. Feldhäcksler (1) nach einem der vorherigen Ansprüche, **gekennzeichnet durch** mindestens eine Sensoreinrichtung (24), mittels der Daten betreffend mindestens einen Ernteparameter und/oder mindestens einen Betriebsparameter des Feldhäckslers (1) erfassbar und an die Steuereinheit (22) leitbar ist, sodass mittels der Steuereinheit (22) in Abhängigkeit der erfassten Daten ein Schaltbefehl erzeugbar und an den Aktor (23) leitbar ist.

16. Feldhäcksler (1) nach einem der vorherigen Ansprüche **gekennzeichnet durch** eine in der Fahrerkabine (15) angeordnete Bedieneinheit (25), mittels der durch einen Maschinenführer ein Schaltbefehl erzeugbar ist, der sodann an den Aktor (23) leitbar ist.

17. Verfahren zur Ernte von Früchten mittels eines Feldhäckslers,
wobei die Früchte mittels einer Aufbereitungseinrichtung (4) aufbereitet werden, die mindestens zwei parallel zueinander angeordnete, drehantreibbare, gemeinsam einen Arbeitsspalt (10) begrenzende Aufbereiterwalzen (5, 6) aufweist,
wobei die Früchte zur Aufbereitung durch den Arbeitsspalt (10) geführt und im Zuge dessen zwischen den Aufbereiterwalzen (5, 6) gequetscht werden,
wobei mindestens eine der Aufbereiterwalzen (5, 6) mittelbar oder unmittelbar mittels einer Antriebseinrichtung (2) angetrieben wird,
wobei ein Antriebsdrehmoment einer Antriebswelle (3) mittels einer Getriebeeinrichtung (7) in Kraft übertragender Weise mit einer Abtriebswelle (8, 9) der Aufbereiterwalze (5, 6) gekoppelt ist,
**dadurch gekennzeichnet, dass**
die Getriebeeinrichtung (7) von einer Fahrerkabine (15) des Feldhäckslers (1) aus zwischen mindestens zwei Schaltstufen geschaltet wird, wobei die Schaltstufen mit voneinander verschiedenen Drehzahlverhältnissen zwischen den Abtriebswellen (8, 9) korrespondieren,
wobei der Feldhäcksler (1) mindestens eine Steuereinheit (22) umfasst, die mit mindestens einem Aktor (23) der Getriebeeinrichtung (7) verbindbar ist, mittels dessen zwischen den Schaltstufen der Getriebeeinrichtung (7) schaltbar ist,
wobei der Aktor (23) mit einer Kupplung (17, 21) zusammenwirkt, die zwischen den Schaltstufen bewegt wird.

18. Verfahren nach Anspruch 17, **dadurch gekennzeichnet, dass** mittels Umschaltung zwischen den Schaltstufen der Getriebeeinrichtung (7) ein Übersetzungsverhältnis zwischen der Antriebswelle (3) und genau einer Abtriebswelle (8, 9) einer der Aufbereiterwalzen (5, 6) verändert wird.

19. Verfahren nach Anspruch 17 oder 18, **dadurch gekennzeichnet, dass** die Schaltstufen der Getriebeeinrichtung (7) infolge händischer Bedienung einer in der Fahrerkabine (15) befindlichen Bedieneinheit (25) und/oder automatisch geschaltet werden.

20. Verfahren nach einem der Ansprüche 17 bis 19, **dadurch gekennzeichnet, dass** mittels mindestens einer Sensoreinrichtung (24) Daten betreffend mindestens einen Ernteparameter und/oder mindestens einen Betriebsparameter des Feldhäckslers (1) erfasst werden, die an die Steuereinheit (22) geleitet werden, wobei mittels der Steuereinheit (22) in Abhängigkeit der erfassten Daten ein Schaltbefehl erzeugt und an den Aktor (23) der Getriebeeinrichtung (7) geleitet wird, mittels dessen infolge des Schaltbefehls die Schaltstufe der Getriebeeinrichtung (7) umgeschaltet wird.

## Claims

1. A self-propelled forage harvester (1), comprising
- a drive device (2), which has at least one drive shaft (3),
- a processing device (4), which has at least two processing rollers (5, 6), as well as
- a gear device (7), which has at least one belt gear,
wherein the processing rollers (5) respectively comprise a driven shaft (8, 9) and are disposed parallel with respect to each other, so that they together delimit a working gap (10),
wherein the belt gear has at least one driving belt (11) as well as at least one driving belt pulley (12) associated with the drive shaft (3) and at least one driven belt pulley (13, 14) associated with at least one of the driven shafts (8, 9),
wherein the drive shaft (3) is connected to the driven belt pulley (13, 14) in a power-transmitting manner by means of the driving belt (11),
**characterized in that**
the gear device (7) comprises at least two gear shift stages, by means of which a speed ratio between the driven shafts (8, 9) of the processing rollers (5, 6) can be varied directly or indirectly, wherein the gear device (7) can be shifted from a driver's cabin (15) of the forage harvester (1),
wherein the self-propelled forage harvester (1) comprises at least one control unit (22) which can be connected to at least one actuator (23) of the gear device (7), by means of which the gear device (7) can be shifted between the gear shift stages, wherein the actuator (23) cooperates with a clutch (17, 21) which is configured for movement between the gear shift stages.

2. The forage harvester (1) according to claim 1, **characterized in that** a transmission ratio between the drive shaft (3) and exactly one of the driven shafts (8, 9) can be varied by means of the gear device (7).

3. The forage harvester (1) according to claim 1 or claim 2, **characterized in that** in a first gear shift stage of the gear device (7), the speed ratio between the driven shafts (8, 9) is 1:1.05.

4. The forage harvester (1) according to one of the preceding claims, **characterized in that** in a second gear shift stage of the gear device (7), the speed ratio between the driven shafts (8, 9) is at least 1:1.10, preferably at least 1:1.15, more preferably at least 1:1.20.

5. The forage harvester (1) according to claim 3 or claim 4, **characterized in that** the speed ratios can be adjusted by means of different belt pulleys which have different diameters.

6. The forage harvester (1) according to one of the preceding claims, **characterized in that** the gear shift stages are associated with a rearward - when viewed in the direction of travel of the forage harvester (1) - of the two processing rollers (5, 6).

7. The forage harvester (1) according to one of the preceding claims, **characterized in that** the drive shaft (3) is formed by a driven shaft of a post-accelerator (27), by means of which chopped harvested material can be accelerated prior to it being ejected from the forage harvester (1).

8. The forage harvester (1) according to one of the preceding claims, **characterized in that** the gear device (7) comprises at least one spur gear (16) which is disposed on at least one of the driven shafts (9) of the processing rollers (6) and cooperates with the associated driven belt pulley (14).

9. The forage harvester (1) according to claim 8, **characterized by** the clutch (17) in the form of a friction clutch in order to be able to shift between the gear shift stages.

10. The forage harvester (1) according to claim 8 or claim 9, **characterized in that** a diameter (18) of at least one driven belt pulley (14) of the gear device (7) can be varied, wherein the driven belt pulley (14) is preferably formed by a segmental variable speed transmission.

11. The forage harvester (1) according to claim 10, **characterized in that** the driven belt pulley (14) has a plurality of segments which can be synchronously moved onto the associated driven shaft (9) with respect to the radial direction.

12. The forage harvester (1) according to one of the preceding claims, **characterized in that** the belt gear of the gear device (7) has at least two driving belts (11, 19) and at least two driven belt pulleys (14, 20) which are associated with the same driven shaft (9) and have different diameters, wherein a respective driving belt (11, 19) is associated with one of the driven belt pulleys (14, 20) and the driven belt pulleys (14, 20) can be brought in alternation into power-transmitting engagement with the associated driven shaft (9).

13. The forage harvester (1) according to claim 12, **characterized in that** the clutch (21) is disposed between the driven belt pulleys (14, 20) and can be brought in alternation into engagement with the two driven belt pulleys (14, 20).

14. The forage harvester (1) according to claim 12 or claim 13, **characterized in that** both driving belts (11, 19) are permanently coupled to the driving belt pulley (12).

15. The forage harvester (1) according to one of the preceding claims, **characterized by** at least one sensor device (24), by means of which data relating to at least one harvest parameter and/or at least one operating parameter of the forage harvester (1) can be detected and can be directed to the control unit (22), so that by means of the control unit (22), as a function of the detected data, a gear shift command can be generated and can be directed to the actuator (23).

16. The forage harvester (1) according to one of the preceding claims, **characterized by** an operating unit (25) disposed in the driver's cabin (15), by means of which a driver of the machine can generate a gear shift command which can then be directed to the actuator (23).

17. A method for harvesting fruits by means of a forage harvester, wherein the fruits are processed by means of a processing device (4), which has at least two processing rollers (5, 6) which can be driven in rotation and which are disposed parallel with respect to each other, together delimiting a working gap (10),
wherein the fruits are fed through the working gap (10) for processing, during which they are crushed between the processing rollers (5, 6),
wherein at least one of the processing rollers (5, 6) is driven directly or indirectly by means of a drive device (2),
wherein a drive torque of a drive shaft (3) is coupled to a driven shaft (8, 9) of the processing roller (5, 6) in a power-transmitting manner by means of a gear device (7),
**characterized in that**
the gear device (7) is shifted between at least two gear shift stages from a driver's cabin (15) of the forage harvester (1), wherein the gear shift stages correspond to speed ratios between the driven shafts (8, 9) which are different with respect to each other,
wherein the forage harvester (1) comprises at least one control unit (22) which can be connected to at least one actuator (23) of the gear device (7), by means of which it is possible to shift between the gear shift stages of the gear device (7),
wherein the actuator (23) cooperates with a clutch (17, 21) which is moved between the gear shift stages.

18. The method according to claim 17, **characterized in that** a transmission ratio between the drive shaft (3) and exactly one driven shaft (8, 9) of one of the processing rollers (5, 6) is varied by means of shifting between the gear shift stages of the gear device (7).

19. The method according to claim 17 or claim 18, **characterized in that** the gear shift stages of the gear device (7) are shifted as a consequence of manual operation of an operating unit (25) located in the driver's cabin (15) and/or are shifted automatically.

20. The method according to one of claims 17 to 19, **characterized in that** by means of at least one sensor device (24), data concerning at least one harvest parameter and/or at least one operating parameter of the forage harvester (1) are detected, which are directed to the control unit (22), wherein by means of the control unit (22), as a function of the detected data, a gear shift command is generated and directed to the actuator (23) of the gear device (7), by means of which, as a consequence of the gear shift command, the gear shift stage of the gear device (7) is shifted.

## Revendications

1. Récolteuse-hacheuse-chargeuse (1) automotrice, comprenant
- un dispositif d'entraînement (2) qui présente au moins un arbre d'entraînement (3),
- un dispositif de conditionnement (4) qui présente au moins deux rouleaux de conditionnement (5, 6), ainsi que
- un dispositif de transmission (7) qui présente au moins un mécanisme de transmission à courroie,
dans laquelle les rouleaux de conditionnement (5) comprennent chacun un arbre mené (8, 9) et sont disposés parallèlement l'un à l'autre, de sorte qu'ils délimitent ensemble un interstice de travail (10),
dans laquelle le mécanisme de transmission à courroie présente au moins une courroie d'entraînement (11) ainsi qu'au moins une poulie d'entraînement (12), associée à l'arbre d'entraînement (3), et au moins une poulie menée (13, 14) associée à au moins un des arbres menés (8, 9),
dans laquelle l'arbre d'entraînement (3) est relié à l'aide de la courroie d'entraînement (11) à la poulie menée (13, 14), de manière à transmettre la force,
**caractérisée en ce que**
le dispositif de transmission (7) comporte au moins deux étages de transmission qui permettent de modifier indirectement ou directement un rapport de vitesses de rotation entre les arbres menés (8, 9) des rouleaux de conditionnement (5, 6),
le dispositif de transmission (7) pouvant être commandé depuis une cabine de conducteur (15) de la récolteuse-hacheuse-chargeuse (1),
la récolteuse-hacheuse-chargeuse (1) automotrice comprenant au moins une unité de contrôle (22) qui peut être reliée à au moins un actionneur (23) du dispositif de transmission (7), lequel actionneur permet de commuter entre les étages de transmission du dispositif de transmission (7),
l'actionneur (23) coopérant avec un embrayage (17, 21) qui est agencé en vue d'un déplacement entre les étages de transmission.

2. Récolteuse-hacheuse-chargeuse (1) selon la revendication 1, **caractérisée en ce que** le dispositif de transmission (7) permet de modifier un rapport de transmission entre l'arbre d'entraînement (3) et exactement un des arbres menés (8, 9).

3. Récolteuse-hacheuse-chargeuse (1) selon la revendication 1 ou 2, **caractérisée en ce que** le rapport de vitesses de rotation entre les arbres menés (8, 9) est de 1/1,05dans un premier étage de transmission du dispositif de transmission (7).

4. Récolteuse-hacheuse-chargeuse (1) selon une des revendications précédentes, **caractérisée en ce que** le rapport de vitesses de rotation entre les arbres menés (8, 9) est au moins de 1/1,10, de préférence au moins de 1/1,15, et notamment de préférence au moins de 1/1,20 dans un deuxième étage de transmission du dispositif de transmission (7).

5. Récolteuse-hacheuse-chargeuse (1) selon la revendication 3 ou 4, **caractérisée en ce que** les rapports de vitesses de rotation peuvent être réglés à l'aide de poulies différentes qui présentent des diamètres différents.

6. Récolteuse-hacheuse-chargeuse (1) selon une des revendications précédentes, **caractérisée en ce que** les étages de transmission sont associés à l'un des rouleaux de conditionnement (5, 6), à savoir le rouleau arrière, vu dans le sens de déplacement de la récolteuse-hacheuse-chargeuse (1).

7. Récolteuse-hacheuse-chargeuse (1) selon une des revendications précédentes, **caractérisée en ce que** l'arbre d'entraînement (3) est constitué de l'arbre mené d'un distributeur-accélérateur (27) qui permet d'accélérer la récolte hachée, avant son éjection de la récolteuse-hacheuse-chargeuse (1).

8. Récolteuse-hacheuse-chargeuse (1) selon une des revendications précédentes, **caractérisée en ce que** le dispositif de transmission (7) comprend au moins un engrenage droit (16) qui est disposé sur au moins un des arbres menés (9) des rouleaux de conditionnement (6) et coopère avec la poulie menée (14) associée.

9. Récolteuse-hacheuse-chargeuse (1) selon la revendication 8, **caractérisée en ce que** l'embrayage (17) se présente sous la forme d'un embrayage à friction qui permet de commuter entre les étages de transmission.

10. Récolteuse-hacheuse-chargeuse (1) selon une des revendications 8 ou 9, **caractérisée en ce qu'**un diamètre (18) d'au moins une poulie menée (14) du dispositif de transmission (7) peut être modifié, la poulie d'entraînement (14) étant constituée de préférence d'un variateur segmenté.

11. Récolteuse-hacheuse-chargeuse (1) selon la revendication 10, **caractérisée en ce que** la poulie d'entraînement (14) présente une pluralité de segments qui peuvent être déplacés de manière synchrone dans la direction radiale, rapporté à l'arbre mené (9) associé.

12. Récolteuse-hacheuse-chargeuse (1) selon une des revendications précédentes, **caractérisée en ce que** le mécanisme de transmission à courroie du dispositif de transmission (7) présente au moins deux courroies d'entraînement (11, 19) et au moins deux poulies menées (14, 20) qui sont associées au même arbre mené (9) et ont des diamètres différents, sachant que chaque fois une courroie d'entraînement (11, 19) est associée à l'une des poulies menées (14, 20), et les poulies menées (14, 20) peuvent être amenées en alternance en prise de transmission de force avec l'arbre mené (9) associé.

13. Récolteuse-hacheuse-chargeuse (1) selon la revendication 12, **caractérisée en ce que** l'embrayage (21) est disposé entre les poulies menées (14, 20) et peut être amené en alternance en prise avec les deux poulies menées (14, 20).

14. Récolteuse-hacheuse-chargeuse (1) selon la revendication 12 ou 13, **caractérisée en ce que** les deux courroies d'entraînement (11, 19) sont accouplées en permanence avec la poulie d'entraînement (12).

15. Récolteuse-hacheuse-chargeuse (1) selon une des revendications précédentes, **caractérisée en ce qu'**elle comporte au moins un dispositif capteur (24) qui permet de recueillir des données concernant au moins un paramètre de récolte et/ou au moins un paramètre de fonctionnement de la récolteuse-hacheuse-chargeuse (1) et de les transmettre à l'unité de contrôle (22), de sorte que l'unité de contrôle (22) permet de générer un ordre de commutation, en fonction des données recueillies, et de les transmettre à l'actionneur (23).

16. Récolteuse-hacheuse-chargeuse (1) selon une des revendications précédentes, **caractérisée en ce qu'**elle comporte une unité de commande (25) qui est installée dans la cabine de conducteur (15) et permet à un opérateur de la machine de générer un ordre de commutation qui peut ensuite être transmis à l'actionneur (23).

17. Procédé de récolte de cultures au moyen d'une récolteuse-hacheuse-chargeuse, selon lequel les cultures sont conditionnées à l'aide d'un dispositif de conditionnement (4) qui présente au moins deux rouleaux de conditionnement (5, 6) disposés parallèlement l'un à l'autre et pouvant être entraînés en rotation et délimitant ensemble un interstice de travail (10),
selon lequel les cultures sont guidées à travers l'interstice de travail (10), en vue du conditionnement, et sont de ce fait comprimées entre les rouleaux de conditionnement (5, 6),
selon lequel au moins un des rouleaux de conditionnement (5, 6) est entraîné indirectement ou directement à l'aide d'un dispositif d'entraînement (2),
selon lequel un couple d'entraînement d'un arbre d'entraînement (3) est couplé à un arbre mené (8, 9) du rouleau de conditionnement (5, 6) à l'aide d'un dispositif de transmission (7), de manière à transmettre la force,
**caractérisé en ce que**
le dispositif de transmission (7) est commuté entre au moins deux étages de transmission depuis une cabine de conducteur (15) de la récolteuse-hacheuse-chargeuse (1), les étages de transmission correspondant à des rapports de vitesses de rotation différents entre les arbres menés (8, 9),
la récolteuse-hacheuse-chargeuse (1) comprenant au moins une unité de contrôle (22) qui peut être reliée à au moins un actionneur (23) du dispositif de transmission (7), qui permet de commuter entre les étages de transmission du dispositif de transmission (7),
l'actionneur (23) coopérant avec un embrayage (17, 21) qui est déplacé entre les étages de transmission.

18. Procédé selon la revendication 17, **caractérisé en ce que** la commutation entre les étages de transmission du dispositif de transmission (7) a pour effet de modifier un rapport de transmission entre l'arbre d'entraînement (3) et exactement un arbre mené (8, 9) de l'un des rouleaux de conditionnement (5, 6).

19. Procédé selon la revendication 17 ou 18, **caractérisé en ce que** les étages de transmission du dispositif de transmission (7) sont commutés suite à une manipulation manuelle d'une unité de commande (25) située dans la cabine de conducteur (15) et/ou de manière automatique.

20. Procédé selon une des revendications 17 à 19, **caractérisé en ce que** des données concernant au moins un paramètre de récolte et/ou au moins un paramètre de fonctionnement de la récolteuse-hacheuse-chargeuse (1) sont recueillies à l'aide d'au moins un dispositif capteur (24) et sont transmises à l'unité de contrôle (22), ladite unité de contrôle (22) servant à générer un ordre de commutation, en fonction des données recueillies, et à le transmettre à l'actionneur (23) du dispositif de transmission (7), qui fait en sorte que l'étage de transmission du dispositif de transmission (7) soit commuté suite à l'ordre de commutation.
